# EUROPEAN PATENT APPLICATION

(11) **EP 4 316 853 A1**
(43) Date of publication of application: **07.02.2024**
(21) Application number: 22781234.4
(22) Date of filing: 31.03.2022
(51) Int. Cl.: B41J 2/01, C09D 11/36, B41M 5/00

(54) **NONAQUEOUS INK COMPOSITION, RECORDING METHOD USING SAME, AND METHOD FOR PRODUCING RECORDED MATTER**

(30) Priority: 31.03.2021 JP 2021062405
(71) Applicant: DNP Fine Chemicals Co., Ltd., Yokohama-shi, Kanagawa 226-0022 (JP)
(72) Inventor: YOSHIMORI, Keishiro, Yokohama-shi, Kanagawa 226-0022 (JP); ORIKASA, Yuka, Yokohama-shi, Kanagawa 226-0022 (JP); MATSUMOTO, Kisei, Yokohama-shi, Kanagawa 226-0022 (JP); UTAKA, Koujun, Yokohama-shi, Kanagawa 226-0022 (JP); TAMURA, Mitsuyoshi, Yokohama-shi, Kanagawa 226-0022 (JP)
(74) Representative: Hasegawa, Kan
(86) International application number: PCT/JP2022/016524
(87) International publication number: WO 2022/211024

(57) **Abstract**

The present invention provides a nonaqueous ink composition which enables the achievement of a recorded matter that exhibits excellent gloss and excellent blocking resistance. A nonaqueous ink composition which contains an organic solvent and is to be ejected by means of an inkjet method, wherein the organic solvent contains an amide solvent (a) and an organic solvent (b) that is represented by the formula below.

[Chem. 1] (1): R₁-(-O-R₂-)n-OH

(In formula (1), R1 represents an alkyl group having 6 or less carbon atoms; R₂ represents an ethylene group or a propylene group; and n represents an integer of 2 to 6.)

## Description

### TECHNICAL FIELD

The present invention relates to a nonaqueous ink composition, a recording method using the same, and a method for producing a recorded matter.

### BACKGROUND ART

As an ink composition, an aqueous ink composition in which a color material is dissolved or dispersed in water or a mixed liquid of water and an organic solvent, or a nonaqueous ink composition in which a color material is dissolved or dispersed in an organic solvent containing no water is widely used.

For example, Patent Document 1 describes a technique relating to a nonaqueous ink composition containing a cyclic ester (lactone-based solvent) and an organic solvent having a predetermined flash point. Patent Document 1 discloses that, since the nonaqueous ink composition contains the cyclic ester (lactone-based solvent) as a solvent, a part of a recording surface is dissolved to allow an ink composition to permeate into a recording medium, thereby improving a rubbing resistance of an image.

Patent Document 1: Japanese Patent No. 6256039

### DISCLOSURE OF THE INVENTION

### Problems to be Solved by the Invention

The lactone-based solvent is a solvent that easily permeates into a resin base material, and the nonaqueous ink composition containing the lactone-based solvent has high permeability to the resin base material.

However, the present inventors have found that when the nonaqueous ink composition permeates into the resin base material and a penetration amount thereof increases, gloss and blocking resistance of the recording surface of the obtained recorded matter decrease.

An object of the invention is to provide a nonaqueous ink composition capable of obtaining a recorded matter exhibiting excellent gloss and excellent blocking resistance.

### Means for Solving the Problems

As a result of intensive studies to solve the above problem, the present inventors have found that the above problem can be solved by a nonaqueous ink composition containing a predetermined organic solvent, and have completed the invention. Specifically, the invention provides the following.

(1) A nonaqueous ink composition, which is to be ejected by an inkjet method, including: an organic solvent, in which the organic solvent contains an amide-based solvent (a), an organic solvent (b) represented by the following formula (1),

   [Chem. 1] R₁-(-O-R₂-)ₙ-OH...(1)

   (in the formula (1), R₁ represents an alkyl group having 6 or less carbon atoms, R₂ represents an ethylene group or a propylene group, and
   n represents an integer of 1 or more and 6 or less).
(2) The nonaqueous ink composition according to (1), in which a mass ratio of a content of the amide-based solvent (a) to a content of the organic solvent (b) (amide-based solvent (a):organic solvent (b)) is within a range of 95:5 to 3:97.
(3) The nonaqueous ink composition according to (1) or (2), in which the amide-based solvent (a) is represented by the following formula (2), 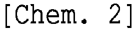 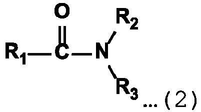 (in the formula (2), R₁ represents hydrogen or an alkyl group having 1 or more and 4 or less carbon atoms, and R₂ and R₃ each independently represent hydrogen or an alkyl group having 1 or more and 4 or less carbon atoms).
(4) The nonaqueous ink composition according to (3), in which the amide-based solvent (a) contains at least one selected from the group consisting of N,N-diethylformamide, N,N-diethylpropanamide, and N,N-diethylacetamide.
(5) The nonaqueous ink composition according to any one of (1) to (4), in which a flash point of the organic solvent (b) is 170°C or lower.
(6) The nonaqueous ink composition according to any one of (1) to (5) further including: a resin, in which the resin contains a resin having an intrinsic viscosity at 25°C of 90 mL/g or more in a range of 5 mass% or less in a total amount of the resin.
(7) The nonaqueous ink composition according to any one of (1) to (6), in which the nonaqueous ink composition is ejected by the inkjet method through a plastic tube using an inkjet recording apparatus including the plastic tube.
(8) The nonaqueous ink composition according to any one of (1) to (7), in which the nonaqueous ink composition is used on a resin base material.
(9) A recording method including: ejecting the nonaqueous ink composition according to any one of (1) to (8) onto a surface of a base material by an inkjet method.
(10) A method for producing a recorded matter including: ejecting the nonaqueous ink composition according to any one of (1) to (8) onto a surface of a base material by an inkjet method.
(11) A recorded matter including: a recording layer made of the nonaqueous ink composition according to any one of (1) to (8) formed on a surface of a base material.

### Effects of the Invention

The nonaqueous ink composition according to the invention provides a recorded matter exhibiting excellent gloss and excellent blocking resistance.

### PREFERRED MODE FOR CARRYING OUT THE INVENTION

Hereinafter, a specific embodiment of the invention will be described in detail. However, the invention is not limited to the following embodiment at all, and can be implemented with appropriate modifications within the scope of the purpose of the invention. Further, in the present description, the expression "-" means "equal to or more than" and "equal to or less than", and the expression "X:Y to A:B" includes "X:Y" and "A:B" themselves, and means a range between "X:Y" and "A:B".

### <1. Nonaqueous Ink Composition>

A nonaqueous ink composition according to the present embodiment is a nonaqueous ink composition which includes an organic solvent and is to be ejected by an inkjet method. The organic solvent contains an amide-based solvent (a), and an organic solvent (b) represented by the following formula.

[Chem. 3] R₁-(-O-R₂-)ₙ-OH... (1)

(In the formula (1), R₁ represents an alkyl group having 6 or less carbon atoms, R₂ represents an ethylene group or a propylene group, and
n represents an integer of 1 or more and 6 or less).

Such a nonaqueous ink composition can provide a recorded matter exhibiting excellent gloss and excellent blocking resistance.

Here, the "nonaqueous ink composition" means an ink composition containing no water (oil-based ink composition), and is different from an aqueous ink composition in which a color material is dissolved or dispersed in water or a mixed liquid of water and an organic solvent. In the present description, the term "containing no water" does not take into account moisture in the atmosphere and water that is unavoidably contained due to additives and the like.

The nonaqueous ink composition according to the present embodiment may be a colored ink containing a color material (including a colored color material and a black and white color material), may be an ink containing a brilliant pigment (scale-like metal particle) for giving a metallic tone to a recorded matter (object), or may be a clear ink containing no color material. In a case in which the nonaqueous ink composition is a clear ink containing no color material, an ink for forming a layer having a desired function may be used. Examples of such an ink include an overcoat ink composition for forming an overcoat layer that protects a recorded matter (object), a matting ink composition for matting a recorded matter (object), and an ink containing an ultraviolet absorber, a light stabilizer, or the like for forming a weather-resistant layer.

In the present description, a flash point of the organic solvent is defined as a flash point measured by a Cleveland open-cup flash point tester when a flash point measured by a tag closed-cup flash point tester is not 80°C or lower, is defined as a flash point measured by a tag closed-cup flash point tester when a flash point measured by the tag closed-cup flash point tester is 80°C or lower and a kinematic viscosity of a solvent at the flash point is less than 10 cSt, and is defined as a flash point measured by a seta closed-cup flash point tester when the kinematic viscosity of the solvent at the flash point is 10 cSt or more.

Hereinafter, each component contained in the nonaqueous ink composition according to the present embodiment will be described.

### [Organic Solvent]

The organic solvent contains the amide-based solvent (a) and the organic solvent (b) represented by the following formula.

[Chem. 4] R₁-(-O-R₂-)ₙ-OH...(1)

(In the formula (1), R₁ represents an alkyl group having 6 or less carbon atoms, R₂ represents an ethylene group or a propylene group, and
n represents an integer of 1 or more and 6 or less).

### (Amide-Based Solvent (a))

The amide-based solvent is a solvent composed of a compound having a -C(=O)-N-group (amide bond).

The amide-based solvent (a) is a solvent that permeates into a base material to a certain extent, similar to that of a lactone-based solvent. Further, the amide-based solvent (a) is easier to dry than the lactone-based solvent, and as a result, permeability into the base material can be lower than that of the nonaqueous ink composition containing the lactone-based solvent. Accordingly, an amount of the solvent remaining in the base material after the surface drying is reduced, and the blocking resistance can be improved.

Further, since the nonaqueous ink composition containing the amide-based solvent (a), which has landed on the base material (recording medium), is dried before bleeding, bleeding in printing is reduced, and printing is clear. On the other hand, by containing the organic solvent (b) having good wettability and spreadability on a base material surface, which will be described below, the nonaqueous ink composition quickly wets and spreads on the base material surface after landing on the base material (recording medium), and thus gloss of a recording surface of the obtained recorded matter can be improved.

The amide-based solvent (a) is preferably an organic solvent composed only of hydrogen or an alkyl group and - C(=O)-N-group, which contains no alkoxy group, for example. For example, an alkylamide-based solvent having the following structure can be preferably used. 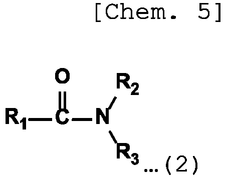 (In the formula (2), R₁ represents hydrogen or an alkyl group having 1 or more and 4 or less carbon atoms, and R₂ and R₃ each independently represent hydrogen or an alkyl group having 1 or more and 4 or less carbon atoms).

R₂ and R₃ in the formula (2) are each preferably an alkyl group having 1 or more and 4 or less carbon atoms, and more preferably an alkyl group having 2 or more and 4 or less carbon atoms.

Specific examples of such alkylamide-based solvent include N,N-diethylformamide, N,N-diethylacetamide, N,N-dipropylformamide, N,N-dibutylformamide, N,N-diethylpropanamide, N,N-dipropylpropanamide, N-ethylformamide, and N-ethylacetamide. Among these, from a viewpoint of particularly achieving the effect of the invention, it is preferable to contain at least one selected from the group consisting of N,N-diethylformamide, N,N-diethylpropanamide, and N,N-diethylacetamide.

Further, examples of the amide-based solvent other than the alkylamide-based solvent include 3-methyl-2-oxazolidinone, 3-ethyl-2-oxazolidinone, N-vinylmethyloxazolidinone, N-methylcaprolactam, N-ethylcaprolactam, N-propylcaprolactam, N-acetylcaprolactam, ε-caprolactam, N-vinylcaprolactam, 2-pyrrolidone, N-methyl-2-pyrrolidone, N-ethyl-2-pyrrolidone, and N-propyl-2-pyrrolidone.

A content of the amide-based solvent (a) is not particularly limited, and a lower limit of the content of the amide-based solvent (a) is preferably 1 mass% or more, more preferably 3 mass% or more, further preferably in a range of 5 mass% or more, still further preferably in a range of 10 mass% or more, and yet still further preferably in a range of 15 mass% or more, in a total amount of the nonaqueous ink composition. Accordingly, in addition to the effect of the invention that a recorded matter exhibiting excellent gloss can be obtained, bleeding in printing is further reduced, and printing is clear.

An upper limit of the content of the amide-based solvent (a) is preferably in a range of 90 mass% or less, more preferably in a range of 85 mass% or less, and further preferably in a range of 80 mass% or less, in the total amount of the nonaqueous ink composition. Accordingly, a nonaqueous ink composition capable of obtaining a recorded matter exhibiting more excellent gloss can be obtained.

### (Organic Solvent (b))

The organic solvent (b) is an organic solvent represented by the following formula.

[Chem. 6] R₁-(-O-R₂-)ₙ-OH...(1)

(In the formula (1), R₁ represents an alkyl group having 6 or less carbon atoms, R₂ represents an ethylene group or a propylene group, and
n represents an integer of 1 or more and 6 or less).

The organic solvent (b) has an -OH group and is excellent in wettability and spreadability to the base material as compared with that of glycol ether dialkyl. Therefore, by combining with the amide-based solvent (a) having good permeability into the base material and a drying property, in addition to reducing bleeding in printing and making printing clearer, the nonaqueous ink composition quickly wets and spreads on the base material (recording medium) after landing on the base material (recording media). Accordingly, the gloss of the recording surface of the obtained recorded matter can be improved.

Further, the organic solvent (b) has a higher polarity than that of the glycol ether dialkyl, and has a higher solubility for a substance that causes foreign matter such as a metal ion contained in an ink composition. Further, nozzle clogging or the like in an inkjet head due to generation of foreign matter in the ink composition due to long-term storage or the like can be prevented, to give a nonaqueous ink composition having excellent storage stability.

Examples of such organic solvent (b) include dipropylene glycol monomethyl ether (flash point: 76.5°C), tripropylene glycol monomethyl ether (flash point: 123°C), diethylene glycol monohexyl ether (flash point: 141°C), triethylene glycol mono-n-butyl ether (flash point: 156°C), tetraethylene glycol monobutyl ether (flash point: 166°C), and tetraethylene glycol monohexyl ether (flash point: 175°C). Among these, the flash point of the organic solvent is preferably 170°C or lower, more preferably 150°C or lower, and further preferably 130°C or lower. By containing the organic solvent (b) having a flash point of 170°C or lower, in addition to the effect of the invention that a nonaqueous ink composition having excellent storage stability is obtained, bleeding in printing is further reduced, and printing is clear.

A lower limit of the flash point of the organic solvent (b) is not particularly limited, and is preferably 70°C or higher, for example.

The content of the organic solvent (b) is not particularly limited, and a lower limit of the content of the organic solvent (b) is preferably in a range of 1 mass% or more, more preferably in a range of 3 mass% or more, and further preferably in a range of 4 mass% or more, in the total amount of the nonaqueous ink composition. Accordingly, a nonaqueous ink composition capable of obtaining a recorded matter exhibiting more excellent gloss can be obtained.

An upper limit of the content of the organic solvent (b) is preferably 92 mass% or less, more preferably 90 mass% or less, further preferably 85 mass% or less, and still further preferably 80 mass% or less. Accordingly, in addition to the effect of the invention, bleeding in printing is further reduced, and printing is clear.

### (Total Content of Amide-Based Solvent (a) and Organic Solvent (b))

A total content of the amide-based solvent (a) and the organic solvent (b) is not particularly limited. For example, the nonaqueous ink composition may be a nonaqueous ink composition in which the organic solvent is composed of only the amide-based solvent (a) and the organic solvent (b), or a nonaqueous ink composition containing a predetermined amount of other organic solvent described below. When a predetermined amount of other organic solvent is contained, a lower limit of the total content of the amide-based solvent (a) and the organic solvent (b) is preferably in a range of 25 mass% or more, more preferably in a range of 30 mass% or more, and further preferably in a range of 35 mass% or more, in the total amount of the nonaqueous ink composition. An upper limit of the total content of the amide-based solvent (a) and the organic solvent (b) is preferably in a range of 90 mass% or less, more preferably in a range of 85 mass% or less, and further preferably in a range of 80 mass% or less, in the total amount of the nonaqueous ink composition.

### (Mass Ratio of Content of Amide-Based Solvent (a) to Content of Organic Solvent (b))

A mass ratio of the content of the amide-based solvent (a) to the content of the organic solvent (b) (organic solvent (a):organic solvent (b)) is preferably in a range of 95:5 to 5:95, more preferably in a range of 95:5 to 50:50, and further preferably in a range of 95:5 to 70:30. In such a range, in addition to the effect of the invention, bleeding in printing is reduced, and printing is clear. Further, the mass ratio of the content of the amide-based solvent (a) to the content of the organic solvent (b) (organic solvent (a):organic solvent (b)) is preferably 95:5 to 5:95, and more preferably 50:50 to 5:95. In such a range, a nonaqueous ink composition capable of obtaining a recorded matter exhibiting more excellent gloss can be obtained.

### (Other Organic Solvent)

The organic solvent may contain an organic solvent other than the amide-based solvent (a) and the organic solvent (b). Specific examples thereof include: glycol ether dialkyl such as ethylene glycol dibutyl ether, ethylene glycol dipropyl ether, diethylene glycol dimethyl ether, diethylene glycol diethyl ether, diethylene glycol methyl ethyl ether, diethylene glycol dipropyl ether, diethylene glycol propyl methyl ether, diethylene glycol dibutyl ether, diethylene glycol butyl methyl ether, diethylene glycol butyl ethyl ether, diethylene glycol methyl-2-ethylhexyl ether, triethylene glycol dimethyl ether, triethylene glycol diethyl ether, triethylene glycol ethyl methyl ether, tetraethylene glycol dimethyl ether, tetraethylene glycol diethyl ether, tetraethylene glycol ethyl methyl ether, propylene glycol diethyl ether, propylene glycol ethyl methyl ether, propylene glycol methyl propyl ether, propylene glycol methyl butyl ether, propylene glycol methyl-2-ethylhexyl ether, dipropylene glycol dimethyl ether, dipropylene glycol diethyl ether, dipropylene glycol ethyl methyl ether, dipropylene glycol methyl propyl ether, dipropylene glycol dipropyl ether, dipropylene glycol methyl butyl ether, tripropylene glycol dimethyl ether, tripropylene glycol diethyl ether, and tripropylene glycol ethyl methyl ether; alcohols such as methyl alcohol, ethyl alcohol, n-propyl alcohol, isopropyl alcohol, and n-butyl alcohol; ketones such as acetone, methyl ethyl ketone, methyl-n-propyl ketone, methyl isopropyl ketone, methyl-n-butyl ketone, methyl isobutyl ketone, methyl-n-amyl ketone, methylhexyl ketone, methyl isoamyl ketone, diethyl ketone, ethyl-n-propyl ketone, ethyl isopropyl ketone, ethyl-n-butyl ketone, ethyl isobutyl ketone, di-n-propyl ketone, diisobutyl ketone, cyclopentanone, cyclohexanone, methylcyclohexanone, isophorone, and acetyl ketone; acetic acid esters such as methyl acetate, ethyl acetate, n-propyl acetate, isopropyl acetate, n-butyl acetate, isobutyl acetate, hexyl acetate, and octyl acetate; lactate esters such as methyl lactate, ethyl lactate, butyl lactate, propyl lactate, ethylhexyl lactate, amyl lactate, and isoamyl lactate; glycols such as ethylene glycol, diethylene glycol, triethylene glycol, propylene glycol, and dipropylene glycol; acetates such as ethylene glycol monobutyl ether acetate, 2-methylbutyl acetate, 3-methoxybutyl ether acetate, and cyclohexyl acetate; saturated hydrocarbons such as n-hexane, isohexane, n-nonane, isononane, dodecane, and isododecane; unsaturated hydrocarbons such as 1-hexene, 1-heptene, and 1-octene; cyclic saturated hydrocarbons such as cyclohexane, cycloheptane, cyclooctane, cyclodecane, and decalin; cyclic unsaturated hydrocarbons such as cyclohexene, cycloheptene, cyclooctene, 1,1,3,5,7-cyclooctatetraene, and cyclododecene; aromatic hydrocarbons such as benzene, toluene, and xylene; morpholines such as N-methylmorpholine, N-ethylmorpholine, and N-formylmorpholine; and common organic solvents such as terpene solvents, and ether solvents. It is preferable to select a solvent having an appropriate HLB value according to a resin, a dispersant, and the like to be combined.

### [Resin]

The nonaqueous ink composition according to the present embodiment may contain no resin or may contain a resin. By containing the resin, fixability, water resistance, and stretchability of a recording layer formed by the nonaqueous ink composition can be improved. Further, gloss of the obtained recorded matter can be improved.

The resin is not particularly limited, and examples thereof include an acrylic resin, a polystyrene-based resin, a polyester-based resin, a vinyl chloride-based resin, a vinyl acetate-based resin, a vinyl chloride-vinyl acetate copolymer resin, a polyethylene-based resin, a polyurethane-based resin, a rosin modified resin, a phenol-based resin, a terpene-based resin, a polyamide-based resin, a vinyl toluene-α-methylstyrene copolymer, an ethylene-vinyl acetate-based copolymer, a cellulose-based resin, a silicone (silicon) resin, an acrylic amide-based resin, an epoxy-based resin, and a copolymer and a mixture thereof. Among these, those containing an acrylic resin, a vinyl chloride-vinyl acetate copolymer resin, a cellulose-based resin, a polyester-based resin, or a polyurethane-based resin are preferable.

The acrylic resin is not particularly limited as long as it is contained as a main component of a monomer that constitutes a (meth) acrylic acid ester monomer. The acrylic resin may be a homopolymer of one type of radical polymerizable monomer or may be any of copolymers in which two or more types of radical polymerizable monomers are selected and used, in particular, a preferred acrylic resin for the oil-based ink composition according to the present embodiment is a homopolymer of methyl methacrylate or a copolymer of methyl methacrylate and at least one compound selected from the group consisting of butyl methacrylate, ethoxyethyl methacrylate, and benzyl methacrylate. Further, examples of a commercially available (meth) acrylic resin include "Paraloid B99N", "Paraloid B60", "Paraloid B66", and "Paraloid B82" manufactured by Rohm and Haas company.

The vinyl chloride-vinyl acetate copolymer resin is a polymer of a vinyl chloride monomer and a vinyl acetate monomer. Examples of a vinyl chloride-vinyl acetate-based copolymer resin include a vinyl chloride-vinyl acetate copolymer, a vinyl chloride/vinyl acetate/maleic acid copolymer, a vinyl chloride/vinyl acetate/vinyl alcohol copolymer, a vinyl chloride/vinyl acetate/hydroxyalkyl acrylate copolymer, and a mixture thereof. The vinyl chloride-vinyl acetate-based copolymer resin described above can be obtained from Nissin Chemical Industry Co., Ltd. under trade names such as "SOLBIN C, CL, CNL, CLL, CLL2, C5R, TA2, TA3, A, AL, TA5R, and M5" and used in the invention.

The vinyl chloride-vinyl acetate copolymer resin can be obtained by polymerization of a vinyl chloride monomer and a vinyl acetate monomer. A method for polymerization can be any well-known polymerization method. The method for polymerization is preferably emulsion polymerization or suspension polymerization, and more preferably suspension polymerization.

The cellulose-based resin is a resin having a cellulose skeleton obtained by biologically or chemically introducing a functional group using cellulose as a raw material. For example, examples of the cellulose-based resin include a cellulose acetate alkylate resin such as a cellulose acetate butyrate resin, a cellulose acetate propionate resin, and a cellulose acetate propionate butyrate resin, an acellulose acetate resin, a nitrocellulose resin, and a mixture thereof. The cellulose-based resin can be obtained and used under trade names such as "CAB 551-0.01", "CAB 551-0.2", "CAB 553-0.4", "CAB 531-1", "CAB 381-0.1", "CAB 381-0.5", "CAB 381-2", "CAB 381-20", "CAP 504", and "CAP 482-0.5" manufactured by Eastman company.

The polyester-based resin includes at least a structural unit obtained by polycondensation of an alcohol component and a carboxylic acid component. The polyester-based resin may contain a modified polyester-based resin. Examples of the polyester-based resin include "VYLON 226", "VYLON 270", "VYLON 560", "VYLON 600", "VYLON 630", "VYLON 660", "VYLON 885", "VYLONGK 250", "VYLONGK 810", "VYLONGK 890", and the like manufactured by TOYOBO CO., LTD., and "elitleUE-3200", "elitleUE-3285", "elitleUE-3320", "elitleUE-9800", "elitleUE-9885", and the like manufactured by UNITIKA LTD.

The polyurethane-based resin includes at least a structural unit obtained by copolymerization of an alcohol component and an isocyanate component. The polyurethane-based resin may contain a polyurethane-based resin modified with polyester, polyether, or caprolactone. The polyurethane-based resin can be obtained and used under trade names such as "UREARNO KL-424", "UREARNO KL-564", "UREARNO KL-593", "UREARNO 3262", and the like manufactured by Arakawa Chemical Industries, Ltd., and "PANDEX 372E", "PANDEX 390E", "PANDEX 394E", "PANDEX 304", "PANDEX 305E", "PANDEX P-870", "PANDEX P-910", "PANDEX P-895", "PANDEX 4030", "PANDEX 4110", and the like manufactured by DIC Corporation.

Further, these acrylic resin, vinyl chloride-vinyl acetate copolymer resin, cellulose-based resin, polyester-based resin, and polyurethane-based resin may be used alone, but a mixture of two kinds of these is preferable, and a resin obtained by mixing an acrylic resin and a vinyl chloride-vinyl acetate copolymer resin is more preferable. A content ratio of the acrylic resin to the vinyl chloride-vinyl acetate copolymer resin can be controlled so as to satisfy requirements of color development, a drying property, a coating property, printability, and the like required for a non-aqueous ink. When the acrylic resin and the vinyl chloride-vinyl acetate copolymer resin are mixed, a mixing ratio is not particularly limited and can be appropriately changed.

A weight average molecular weight (relative molecular mass) of the resin is not particularly limited, and is preferably 5000 or more, and more preferably 15000 or more. The weight average molecular weight (relative molecular mass) is preferably 100000 or less, and more preferably 50000 or less. The relative molecular weight of the resin can be measured by normal gel permeation chromatography (GPC).

The resin contained in the nonaqueous ink composition is preferably in a range of 0.05 mass% or more, more preferably in a range of 0.1 mass% or more, and further preferably in a range of 0.5 mass% or more, in the total amount of the nonaqueous ink composition. The resin contained in the nonaqueous ink composition is preferably contained in a range of 20.0 mass% or less, more preferably in a range of 15.0 mass% or less, and further preferably in a range of 10.0 mass% or less, in the total amount of the nonaqueous ink composition.

Further, the resin contained in the nonaqueous ink composition according to the present embodiment preferably contains a resin having an intrinsic viscosity at 25°C of 90 mL/g or more in a range of 5 mass% or less in a total amount of the resin. Accordingly, in addition to the effect of the invention, a decrease in landing accuracy due to flight deflection or the like of an ink droplet of the nonaqueous ink composition ejected by an inkjet method is small, and solid filling is excellent. Further, in the nonaqueous ink composition according to the present embodiment, which has excellent storage stability, since the resin having an intrinsic viscosity of 90 mL/g or more is in the range of 5 mass% or less in the total amount of the resin, inkjet ejection stability can be made extremely high.

In the present description, the intrinsic viscosity can be obtained by obtaining a relative viscosity [η_{SP}]((η - η₀)/η₀ (η₀: solvent viscosity, η: solution viscosity)) and a concentration C after dispersing a target resin in a dispersion solvent, and separating molecules contained in the resin from a column filled with a granular gel subjected to gel permeation chromatography (GPC), and extrapolating the concentration C to 0 (C → 0) in an expression Lim ([η_{SP}]/C). The dispersion solvent is not particularly limited, and for example, tetrahydrofuran can be used.

A content of the resin having the intrinsic viscosity at 25°C of 90 mL/g or more is preferably in a range of 4.0 mass% or less, more preferably in a range of 3.5 mass% or less, and further preferably in a range of 2.5 mass% or less in the total amount of the resin.

### [Color Material]

The nonaqueous ink composition according to the present embodiment may contain a color material. The color material is not particularly limited, and may be a dye-based color material or a pigment-based color material. From a viewpoint that the recorded matter has good resistance such as water resistance and light resistance, it is preferable to use a pigment (pigment-based color material). The pigment that can be used in the nonaqueous ink composition according to the present embodiment is not particularly limited, and examples thereof include an organic pigment or an inorganic pigment used in the ink composition in the related art. These may be used alone or may be used in combination of two or more thereof. The nonaqueous ink composition according to the present embodiment may contain no color material.

When a pigment is used in the nonaqueous ink composition according to the present embodiment, dispersion stability of the pigment can be improved by using a dispersant or a dispersion aid (pigment derivative) described below.

Specific examples of the organic pigment include an insoluble azo pigment, a soluble azo pigment, a derivative from a dye, a phthalocyanine-based organic pigment, a quinacridone-based organic pigment, a perylene-based organic pigment, a perinone-based organic pigment, an azomethine-based organic pigment, an anthraquinone-based organic pigment (anthrone-based organic pigment), a xanthene-based organic pigment, a diketopyrrolopyrrole-based organic pigment, a dioxazine-based organic pigment, a nickel azo-based pigment, an isoindolinone-based organic pigment, a pyranthrone-based organic pigment, a thioindigo-based organic pigment, a condensed azo-based organic pigment, a benzimidazolone-based organic pigment, a quinophthalone-based organic pigment, an isoindoline-based organic pigment, an organic solid solution pigment such as a quinacridone-based solid solution pigment or a perylene-based solid solution pigment, and other pigments such as a lake pigment and a carbon black.

Examples of the organic pigment by a color index (C. I.) number include: C. I. Pigment Yellow 1, 2, 3, 12, 13, 14, 16, 17, 20, 24, 73, 74, 75, 83, 93, 95, 97, 98, 109, 110, 114, 117, 120, 125, 128, 129, 130, 137, 138, 139, 147, 148, 150, 151, 153, 154, 155, 166, 168, 180, 185, 213, and 214; C. I. Pigment Red 5, 7, 9, 12, 48, 49, 52, 53, 57:1, 97, 112, 122, 123, 146, 149, 150, 168, 177, 180, 184, 192, 202, 206, 208, 209, 215, 216, 217, 220, 223, 224, 226, 227, 228, 238, 240, 254, 255, 269, and 291; C. I. Pigment Orange 16, 36, 43, 51, 55, 59, 61, 64, 71, and 73; C. I. Pigment Violet 19, 23, 29, 30, 37, 40, and 50; C. I. Pigment Blue 15, 15:1, 15:3, 15:4, 15:6, 16, 22, 60, and 64; C. I. Pigment Green 7, 36, 58, 59, 62, and 63; C. I. Pigment Brown 23, 25, and 26; and C. I. Pigment Black 7.

Specific examples of the dye that can be used in the nonaqueous ink composition according to the present embodiment include an azo-based dye, a benzoquinone-based dye, a naphthoquinone-based dye, an anthraquinone-based dye, a cyanine-based dye, a squarylium-based dye, a chroconium-based dye, a merocyanine-based dye, a stilbene-based dye, a diarylmethane-based dye, a triarylmethane-based dye, a fluoran-based dye, a spiropyran-based dye, a phthalocyanine-based dye, an indigo-based dye such as indigoide, a fulgide-based dye, a nickel complex-based dye, and an azulene-based dye.

Specific examples of the inorganic pigment that can be used in the nonaqueous ink composition according to the present embodiment include titanium oxide, barium sulfate, calcium carbonate, zinc oxide, barium carbonate, silica, talc, clay, synthetic mica, alumina, zinc oxide, lead sulfate, yellow lead, zinc yellow, red oxide (red iron oxide (III), cadmium red, ultramarine blue, Prussian blue, chromium oxide green, cobalt green, amber, titanium black, aluminum, titanium, indium, synthetic iron black, and inorganic solid solution pigment.

An average dispersion particle diameter of the pigment that can be contained in the nonaqueous ink composition according to the present embodiment is not particularly limited as long as desired color development is possible. Although a volume average particle diameter varies depending on a type of the pigment used, from a viewpoint of obtaining good dispersibility and dispersion stability and sufficient coloring power of the pigment, the volume average particle diameter is preferably in a range of 5 nm or more, more preferably 20 nm or more, and further preferably 30 nm or more. By making the volume average particle diameter to be a lower limit value or more described above, light resistance of the nonaqueous ink composition can be improved. The volume average particle diameter is preferably in a range of 300 nm or less, more preferably 200 nm or less, and further preferably 150 nm or less. By making the volume average particle diameter to be an upper limit value or less described above, inkjet ejection stability can be improved when the nonaqueous ink composition is a nonaqueous inkjet ink composition which is ejected onto a surface of the base material by an inkjet method. In the present embodiment, the volume average particle diameter of the pigment is a volume-based cumulative 50% particle diameter (D50) measured at 25°C using a particle diameter distribution analyzer (NANOTRACWAVE particle size analyzer manufactured by Microtrack Bell Co., Ltd.). In the present description, the term "volume-based cumulative 50% particle diameter (D50)" means a particle diameter at which a cumulative volume calculated from a small diameter side is 50%. The "volume-based cumulative 50% particle diameter (D50)" may be referred to as a "volume average particle diameter D50" or a "median diameter".

In the ink set including a plurality of nonaqueous ink compositions according to the present embodiment, the volume average particle diameters of the pigments contained in the respective nonaqueous ink compositions may be the same or may be different. For example, in a case of an ink set containing a cyan ink and a magenta ink of the nonaqueous ink composition according to the present embodiment, the volume average particle diameter of the pigment contained in the cyan ink and the volume average particle diameter of the pigment contained in the magenta ink may be the same or may be different.

In the nonaqueous ink composition according to the present embodiment, a content of the pigment is not particularly limited, and may be appropriately adjusted as long as a desired image can be formed. Specifically, although the content of the pigment depends on the type of the pigment, the content of the pigment is preferably in a range of 0.05 mass% or more, and more preferably in a range of 0.1 mass% or more, in the total amount of the nonaqueous ink composition. The content of the pigment is preferably in a range of 20 mass% or less, more preferably in a range of 10 mass% or less, in the total amount of the nonaqueous ink composition. By making the content of the pigment to be in the range of 0.05 mass% or more, or in the range of 20 mass% or less, an excellent balance can be obtained between the dispersion stability and the coloring power of the pigment.

Further, in the nonaqueous ink composition according to the present embodiment, a color to be recorded (printed) is not particularly limited, and a color material may be selected according to a purpose and used in combination. The color can be used for inks of respective colors such as yellow, magenta, cyan, and black, light magenta, light cyan, light black, orange, green, red, and white. In this case, in an ink set containing the nonaqueous ink composition according to the present embodiment, color materials of the same color may be selected.

### [Dispersant]

If necessary, a dispersant may be used in the nonaqueous ink composition according to the present embodiment. As the dispersant, any dispersant used in the nonaqueous ink composition can be used. As the dispersant, a polymeric dispersant may be used. Such dispersant includes a main chain such as a polyester-based main chain, a polyacrylate-based main chain, a polyurethane-based main chain, a polyamine-based main chain, or a polycaprolactone-based main chain, and a side chain having a polar group such as an amino group, a carboxyl group, a sulfone group, or a hydroxyl group. As a polyacrylate-based dispersant, for example, Disperbyk-2000, 2001, 2008, 2009, 2010, 2020, 2020N, 2022, 2025, 2050, 2070, 2095, 2150, 2151, 2155, 2163, and 2164, BYKJET-9130, 9131, 9132, 9133, 9151 (manufactured by BYK-Chemie), Efka PX4310, PX4320, PX4330, PA4401, 4402, PA4403, 4570, 7411, 7477, PX4700, and PX4701 (manufactured by BASF SE), TREPLUS D-1200, D-1410, D-1420, and MD-1000 (manufactured by Otsuka Chemical Co., Ltd.), Flowlen DOPA-15BHFS, 17HF, 22, G-700, 900, NC-500, and GW-1500 (manufactured by KYOEISHA CHEMICALCo., Ltd.) are used. As a polycaprolactone-based dispersant, for example, Ajisper PB821, PB822, and PB881 (manufactured by Ajinomoto Fine-Techno Co., Inc.), Hinoact KF-1000, T-6000, T-7000, T-8000, T-8000E, and T-9050 (manufactured by Kawaken Fine Chemicals Co., Ltd.), Solsperse 20000, 24000, 32000, 32500, 32550, 32600, 33000, 33500, 34000, 35200, 36000, 37500, 39000, 71000, 76400, 76500, 86000, 88000, J180, and J200 (manufactured by Lubrizol Corporation), TEGO Dispers 652, 655, 685, 688, and 690 (manufactured by Evonik Japan Co., Ltd.) are used. As a preferred dispersant, BYKJET-9130, 9131, 9132, 9133, and 9151, Efka PX4310, PX4320, PX4330, PX4700, and PX4701, Solsperse 20000, 24000, 32000, 33000, 33500, 34000, 35200, 39000, 71000, 76500, 86000, 88000, J180, and J200, TEGO Dispers 655, 685, 688, and 690, and the like are used. These may be used alone or a mixture thereof may be used.

A content of the dispersant is not particularly limited, and a lower limit of the content of the dispersant is preferably in a range of 0.1 mass% or more, more preferably in a range of 0.5 mass% or more, and further preferably in a range of 0.8 mass% or more, in the total amount of the nonaqueous ink composition. The content of the dispersant is not particularly limited, but the upper limit of the content of the dispersant is preferably in a range of 5.0 mass% or less, more preferably in a range of 4.0 mass% or less, and further preferably in a range of 3.0 mass% or less, in the total amount of the nonaqueous ink composition.

### [Dispersion Aid]

If necessary, a dispersion aid may be used in the nonaqueous ink composition according to the present embodiment. The dispersion aid adheres to a surface of the color material (pigment), and has a functional group that increases affinity with the organic solvent and dispersant in the nonaqueous ink composition, thereby improving dispersion stability. As the dispersion aid, a known pigment derivative having a functional group such as an acidic group, a basic group, or a neutral group in an organic pigment residue can be used.

### [Surfactant]

In the nonaqueous ink composition according to the present embodiment, a surfactant may be added for a purpose of reducing volatilization of an ink composition in a device such as a nozzle portion or a tube, preventing solidification of the ink composition, and resolubility when the ink composition is solidified, and for a purpose of reducing surface tension and improving wettability with a recording medium (base material). Examples of the surfactant include: NONION P-208, P-210, P-213, E-202S, E-205S, E-215, K-204, K-220, S-207, S-215, A-10R, A-13P, NC-203, and NC-207 (manufactured by NOF CORPORATION), EMULGEN 106, 108, 707, 709, A-90, and A-60 (manufactured by Kao Corporation), Flowlen G-70, D-90, and TG-740W (manufactured by KYOEISHA CHEMICAL Co., Ltd.), POEM J-0081HV (manufactured by Riken Vitamin Co., Ltd.), ADEKATOL NP-620, NP-650, NP-660, NP-675, NP-683, and NP-686, ADEKACOL CS-141E, and TS-230E (manufactured by ADEKA Co., Ltd.), SORGEN 30V, 40, TW-20, and TW-80, NOIGEN CX-100 (manufactured by DKS Co. Ltd.), which are polyoxyalkylene alkyl ethers. As a fluorine-based surfactant, it is preferable to use a fluorine-modified polymer, and specific examples thereof include BYK-340 (manufactured by BYK-Chemie Japan). As a silicon-based surfactant, it is preferable to use polyester-modified silicon or polyether-modified silicon, and specific examples thereof include BYK-313, 315N, 322, 326, 331, 347, and 348, and BYK-UV3500, 3510, 3530, and 3570 (all manufactured by BYK-Chemie Japan). Specific examples of an acetylene glycol-based surfactant include Surfynol (registered trademark) 82, 104, 465, and 485, and TG (all manufactured by Air Products Japan), Olfine (registered trademark) STG, and E1010 (all manufactured by Nissin Chemical Industry CO., Ltd.).

The surfactant is not limited to those described above, an anionic surfactant, a cationic surfactant, an amphoteric surfactant, or a nonionic surfactant may be used, and may be appropriately selected according to an addition purpose.

### [Other Components]

The nonaqueous ink composition according to the present embodiment may contain, as an optional component, a known additive such as a stabilizer such as an antioxidant or an ultraviolet absorber, an epoxidized product, polycarboxylic acid, a surface conditioner, a slip agent, a leveling agent (acrylic leveling agent, silicon-based leveling agent, or the like), an antifoaming agent, a pH adjuster, a sterilizer, a preservative, a deodorant, a charge adjuster, or a wetting agent. Specific examples of the antioxidant include a hindered phenol-based antioxidant, an amine-based antioxidant, a phosphorus-based antioxidant, a sulfur-based antioxidant, and a hydrazine-based antioxidant. Specific examples thereof include BHA (2,3-butyl-4-oxyanisole) and BHT (2,6-di-t-butyl-p-cresol). Further, as the ultraviolet absorber, a benzophenone-based compound or a benzotriazole-based compound can be used. Specific examples of the epoxidized product include an epoxy glyceride, an epoxy fatty acid monoester, and an epoxyhexahydrophthalate. Specific examples thereof include ADK CIZER O-130P and ADK CIZER O-180A (manufactured by ADEKA Corporation). Specific examples of the polycarboxylic acid include citric acid and maleic acid.

### <2. Method for Producing Ink Composition>

The ink composition according to the present embodiment can be produced by mixing the amide-based solvent (a), the organic solvent (b) having an -OH group, and each main component (for example, a resin and a color material) using a paint shaker. In this case, each component may be dispersed with zirconia beads. The nonaqueous ink composition according to the present embodiment may be adjusted to a desired dissolved oxygen amount or a desired dissolved nitrogen amount by, for example, performing a degassing treatment as necessary.

In this case, the organic solvent is preferably dried in advance. By drying the organic solvent in advance, an amount of moisture contained in the nonaqueous ink composition can be reduced. In particular, since the organic solvent (b) having an -OH group has high water absorbability and absorbs moisture in the air, it is particularly preferable to dry the organic solvent (b) in advance. Examples of a method for drying the organic solvent include a method of spraying an inert gas (for example, a nitrogen gas), which is dried in an inert gas atmosphere such as nitrogen, for a predetermined time, a method of distilling and refining the organic solvent, a method of permeating the organic solvent through a semipermeable membrane that selectively permeates water, and a method of selectively adsorbing water mixed in the organic solvent with a water adsorbent that adsorbs water.

### <3. Recording Method Using the Ink Composition>

The recording method according to the present embodiment is a recording method in which the nonaqueous ink composition is ejected onto a surface of a base material by an inkjet method. The nonaqueous ink composition can provide a recorded matter exhibiting excellent gloss, and the recording method according to the present embodiment also can provide a recorded matter exhibiting excellent gloss. Further, since the nonaqueous ink composition is excellent in storage stability and can prevent the generation of foreign matter in the nonaqueous ink composition, the recording method, in which the nonaqueous ink composition is ejected onto the surface of the base material by the inkjet method, is a recording method having high inkjet ejection stability. A method of ejecting ink by the inkjet method may be a piezo method using a piezoelectric element or a thermal method using a heating element, and is not particularly limited.

### <4. Method of Producing Recorded Matter>

The recording method using the ink composition can also be defined as a method for producing a recorded matter. The method for producing a recorded matter according to the present embodiment also can provide a recorded matter exhibiting excellent gloss. Further, the nonaqueous ink composition having excellent storage stability also has high ejection stability when ejected onto the surface of the base material by the inkjet method.

### <5. Recorded Matter>

Each layer constituting the recorded matter manufactured by the method for producing a recorded matter according to the present embodiment will be described.

### [Medium (Recording Medium)]

The base material (recording medium) that can be used in the recording method according to the present embodiment is not particularly limited, and may be a resin base material (including a base material whose surface is mainly made of a resin), a non-absorbent base material such as metal plate glass, an absorbent base material such as paper or cloth, or a surface-coated base material such as a base material with a receiving layer, and various base materials can be used.

Among these, since the nonaqueous ink composition is a nonaqueous ink composition containing no water, a nonaqueous ink composition having a surface mainly made of a resin is preferable. In particular, since the nonaqueous ink composition contains the amide-based solvent (a) having permeability to the resin base material, bleeding in printing on a medium (recording medium) having a surface made of a resin is reduced, and printing is clear. Examples of the resin include a polyvinyl chloride-based polymer, acryl, PET, polycarbonate, PE, and PP. Further, the resin may also be used for a resin base material (so-called resin base material for lamination) on a premise that a film is attached to a recording surface of a recorded matter. In particular, a base material (recording medium) having a hard or soft polyvinyl chloride polymer surface is preferable. Examples of the base material (recording medium) whose surface is made of a polyvinyl chloride polymer include a polyvinyl chloride base material (film or sheet).

### [Recording Layer]

The recording layer is a layer formed by volatilizing a solvent contained in the nonaqueous ink composition, and is a layer for forming a desired image. By ejecting the nonaqueous ink composition, a recorded matter exhibiting excellent gloss can be obtained.

The layer formed by volatilizing the solvent contained in the nonaqueous ink composition may be formed of a plurality of layers. For example, a layer of a color ink (for example, yellow, magenta, cyan, or black) in the nonaqueous ink composition may be formed on a layer of a white ink in the nonaqueous ink composition.

### [Other Layers]

The recorded matter according to the present embodiment may further include a layer having a desired function on an upper surface of the recording layer. For example, an overcoat layer containing at least one of a resin and a wax may be formed for a purpose of further imparting rubbing resistance and gloss to the recorded matter. Further, a layer expressing a feeling of unevenness (matte surface) may be formed on the surface by containing a filler or changing a film thickness for each pixel. Further, in order to impart weather resistance to the recorded matter, a weather-resistant layer containing an ultraviolet absorber, a light stabilizer, or the like, a brilliant layer containing a brilliant pigment, or the like may be formed.

In the recorded matter according to the present embodiment, the recorded matter including the recording layer formed by the nonaqueous ink composition has been described. For example, a layer having a desired function may be formed by ejecting the nonaqueous ink composition onto a recording layer formed by a known ink composition in the related art. Further, a layer having a desired function may be formed by ejecting the nonaqueous ink composition onto a recording layer formed by the nonaqueous ink composition.

### <6. Inkjet Recording Apparatus>

As an inkjet recording apparatus for ejecting the nonaqueous ink composition by the inkjet method, a known apparatus in the related art can be used. For example, an inkjet printer such as VersaArt RE-640 manufactured by Roland DG Corporation can be used.

As an example of a configuration of the inkjet recording apparatus, an on-carriage type and a serial printer type inkjet recording apparatus will be described. However, the inkjet recording apparatus capable of implementing the recording method according to the present embodiment may be an off-carriage type inkjet recording apparatus in which an ink cartridge is fixed to an outside, or may be a line printer type inkjet recording apparatus in which an ink composition is ejected onto a recording medium (base material) without moving an inkjet head.

Further, the inkjet recording apparatus preferably includes a heating mechanism and a fixing mechanism that fixes the base material. A drying speed of the organic solvent contained in the nonaqueous ink composition can be improved by controlling a surface temperature of the base material by the heating mechanism provided in the inkjet recording apparatus to dry the nonaqueous ink composition landed on the base material (recording medium). Further, by the fixing mechanism that fixes the base material, the nonaqueous ink composition can be dried in a state in which the base material (recording medium) is fixed, and uneven application of heat due to bending of the base material by heating can be prevented. Accordingly, the nonaqueous ink composition landed on the base material (recording medium) can be effectively dried.

Further, the inkjet recording apparatus may include a plastic tube that connects a container (an ink cartridge, a bottle, or the like) that stores the nonaqueous ink composition and an inkjet head that ejects the nonaqueous ink composition, and the nonaqueous ink composition may be supplied to the inkjet head through the plastic tube and ejected by the inkjet method. When the nonaqueous ink composition is present in a plastic tube, a part of the organic solvent contained in the nonaqueous ink composition may volatilize. As a result, a component amount of the organic solvent contained in the nonaqueous ink composition may change at a stage of inkjet ejection, and a desired characteristic may not be obtained.

In particular, even if the alkylamide-based solvent is present in the plastic tube, a volatilization amount of the alkylamide-based solvent is small. The volatilization amount of the organic solvent in the plastic tube does not necessarily correlate with a volatile parameter of the organic solvent itself such as a boiling point, a flash point, and an evaporation enthalpy of the organic solvent. This is because permeability to plastic is different depending on a type of the organic solvent, and volatility in a sealed low-density polyethylene tube is a parameter rather caused by the permeability to the plastic, and specifically caused by a chemical structure, a molecular weight, compatibility, and the like of the organic solvent.

Since the alkylamide-based solvent is a solvent having a small volatilization amount in the plastic tube, the nonaqueous ink composition containing the alkylamide-based solvent can be ejected in an inkjet manner in a state of maintaining the component amount of the organic solvent contained in the nonaqueous ink composition.

The volatilization amount of the organic solvent in the plastic tube can be obtained by filling the organic solvent in a low-density polyethylene tube (a tube obtained by cutting a polyethylene tube hose (model number: 6-608-03, low-density polyethylene (PE-LD) with an inner diameter of 3 mm and an outer diameter of 5 mm) made by AS ONE CORPORATION into 12 cm lengths), sealing the tube, storing the tube at 50°C for one week, and measuring the volatilization amount after storage. For example, the volatilization amount of diethylene glycol dimethyl ether is 68 mass%, that of diethylene glycol methyl ethyl ether is 58 mass%, that of diethylene glycol diethyl ether is 54 mass%, and that of dipropylene glycol dimethyl ether is 59 mass%, whereas the volatilization amount of N,N-diethylformamide is 11 mass%, that of N,N-diethylpropanamide is 12 mass%, and that of N,N-diethylacetamide is 13 mass%. It can be seen that the alkylamide-based solvent is a solvent having a small volatilization amount in the plastic tube.

A material of the plastic tube is not particularly limited, and examples thereof include polyolefin-based resin such as a polyethylene-based resin, an ethylene-propylene-diene rubber, nylon, polyurethane, and PTFE. Among these, the polyethylene-based resin and the ethylene-propylene-diene rubber are preferred.

Further, as described above, the inkjet recording apparatus according to the present embodiment can be used for inks of respective colors such as yellow, magenta, cyan, and black, light magenta, light cyan, light black, orange, green, red, and white, and an order of colors to be printed and a position and configuration of a head are not particularly limited. Further, the inkjet recording apparatus according to the present embodiment may or may not include a winding mechanism for the recording medium (base material), a drying mechanism for drying the surface of the base material, and an ink circulation mechanism.

The inkjet head for ejecting the nonaqueous ink composition may be a piezo inkjet head using a piezoelectric element or a thermal inkjet head using a heating element, and is not particularly limited.

### [Examples]

Hereinafter, the invention will be described in more detail with reference to examples, however, the invention is not limited to these descriptions.

### 1. Preparation of Resin

### (1) Acrylic Resin

To 300g of diethylene glycol diethyl ether maintained at 100°C was added dropwise a mixture of 150g of methyl methacrylate, 50g of butyl methacrylate, and a predetermined amount of t-butylperoxy-2-ethylhexanoate (polymerization initiator) over 1.5 hours. After completion of dropwise addition, the obtained mixture was reacted at 100°C for 2 hours and then cooled to give a colorless and transparent polymer solution of methyl methacrylate. Thereafter, a solvent was distilled off from the polymer solution to give a polymer of methyl methacrylate. At this time, the amount of the t-butyl peroxy-2-ethylhexanoate, which is a polymerization initiator, was changed to control a polymerization average molecular weight of methyl methacrylate (acrylic resin) to 30,000 to 105,000 (A mass of the polymerization initiator used at this time is shown in Table 1 below. This is indicated as "initiator amount" in Table 1.).

### (2) Vinyl Chloride-Vinyl Acetate Copolymer Resin

After nitrogen substitution, to an autoclave equipped with a stirring device was charged with 100 parts by mass of deionized water, 40 parts by mass of methanol, 32 parts by mass of vinyl chloride, 5 parts by mass of vinyl acetate, 0.2 parts by mass of glycidyl methacrylate, 3.55 parts by mass of hydroxypropyl acrylate, 0.1 parts by mass of hydroxypropyl methyl cellulose (suspension agent), 0.026 parts by mass of di-2-ethylhexyl peroxydicarbonate (polymerization initiator), and a predetermined amount of di-3,5,5-trimethylhexanol peroxide (polymerization initiator), and the obtained mixture was heated to 63°C while being stirred in a nitrogen gas atmosphere, and immediately after reaching 63°C, 48 parts by mass of vinyl chloride was continuously injected for 6 hours, and a mixture of 0.6 parts by mass of glycidyl methacrylate and 10.65 parts by mass of hydroxypropyl acrylate was continuously injected for 5.4 hours to carry out a copolymerization reaction. When an internal pressure of the autoclave reached 0.3 MPa, a residual pressure was released, the resultant was cooled, resin slurry was taken out, filtered, and dried to give a vinyl chloride-based copolymer resin. At this time, the amount of di-3,5,5-trimethylhexanol peroxide, which is a polymerization initiator, was changed to control a polymerization average molecular weight of the vinyl chloride-vinyl acetate copolymer resin to 40,000 to 75,000 (A mass of the polymerization initiator used at this time is shown in Table 1 below. This is indicated as "initiator amount" in Table 1.).

Table 1 shows a weight average molecular weight (relative molecular mass) of each resin (acrylic resin, vinyl chloride-vinyl acetate copolymer resin) and a ratio of each resin having an intrinsic viscosity at 25°C of 90 mL/g or more. The weight average molecular weight (relative molecular mass) was measured by gel permeation chromatography (GPC). Further, in the ratio of each resin having an intrinsic viscosity of 90 mL/g or more, the intrinsic viscosity was obtained by connecting a viscosity detector (ViscoStar Type III manufactured by WYATT) and a refractive index detector (Optilab T-rEX manufactured by WYATT) to an SEC (GPC) system manufactured by Shimadzu Corporation, allowing a sample to pass through a column in which the sample was heated to 40°C in the SEC (GPC) system manufactured by Shimadzu Corporation using tetrahyrofuran as a dispersion solvent, obtaining a relative viscosity [ηSP] from a passed substance cooled to 25°C by the viscosity detector, obtaining a concentration C by the refractive index detector, and extrapolating the concentration C to 0 in Lim ([ηSP]/C).

**[Table 1]**

| | | Weight average molecular weight (Relative molecular mass) | Product number | Initiator amount (g) | 90 mL/g or more |
|---|---|---|---|---|---|
| Acrylic resin | Acrylic resin 1 | Mw=30000 | - | 1.20 | 0.0 |
| | Acrylic resin 2 | Mw=80000 | - | 0.20 | 2.2 |
| | Acrylic resin 3 | Mw=105000 | - | 0.10 | 8.1 |
| Vinyl chloride-vinyl acetate copolymer resin | Vinyl chloride-vinyl acetate copolymer resin 1 | Mw=40000 | - | 0.58 | 0.3 |
| | Vinyl chloride-vinyl acetate copolymer resin 2 | Mw=50000 | - | 0.37 | 1.4 |
| | Vinyl chloride-vinyl acetate copolymer resin 3 | Mw=75000 | - | 0.14 | 8.2 |

### 2. Preparation of Nonaqueous Ink Composition

Nonaqueous ink compositions in the examples and comparative examples were prepared using the respective organic solvents, resins, dispersants, and pigments (color materials) according to ratios of respective components shown in the following table. Specifically, the respective components were dispersed with zirconia beads using a paint shaker to prepare a nonaqueous ink composition. A unit is mass%.

### 3. Evaluation 1

### (Bleeding)

The nonaqueous ink compositions in the examples and comparative examples were evaluated for bleeding. Specifically, the nonaqueous ink compositions in the examples and comparative examples were used in an inkjet method using an inkjet printer (trade name: VersaArt RE-640, manufactured by Roland DG Corporation) to print an image having 6 pt characters having a color different from that of a solid portion in the solid portion having each color on a recording medium (glued polyvinyl chloride film (IMAGin JT5829R, manufactured by MACtac) in a high-quality printing mode (1440 × 720 dpi) at a base material surface temperature of 50°C, and the obtained printed matter was dried in an oven at 60°C for 5 minutes, and then bleeding of the printed matter was visually observed with a loupe (x10) (this is indicated as "bleeding" in the table).

### Evaluation Standard

Evaluation 5: No ink bleeding is observed with the loupe.
Evaluation 4: No ink bleeding is visually observed, and 6 pt characters are clear.
Evaluation 3: Slight ink bleeding is visually observed, but design is not impaired.
Evaluation 2: Bleeding of ink is visually observed, but 6 pt characters are identifiable.
Evaluation 1: Significant bleeding of ink is visually observed, and 6 pt characters can not be visually recognized.

### (Gloss)

The nonaqueous ink compositions in the examples and comparative examples were evaluated for gloss. Specifically, in the same manner as in the above bleeding evaluation test, the nonaqueous ink compositions were printed on a recording medium (glued polyvinyl chloride film (IMAGin JT5829R, manufactured by MACtac) in a high-quality printing mode (1440 × 720 dpi) at a base material surface temperature of 40°C to form a solid portion, after drying in an oven at 60°C for 5 minutes, 20° gloss level of the printed matter was measured. The gloss level is measured with a handy type gloss meter Phopoint IQ-S (manufactured by KONICA MINOLTA, INC.) (this is indicated as "gloss" in the table).

### Evaluation Standard

Evaluation 5: The 20° gloss is 70 or more.
Evaluation 4: The 20° gloss is 65 or more and less than 70.
Evaluation 3: The 20° gloss is 55 or more and less than 65.
Evaluation 2: The 20° gloss is 50 or more and less than 55.
Evaluation 1: The 20° gloss is less than 50.

### (Blocking Resistance)

The nonaqueous ink compositions in the examples and comparative examples were evaluated for blocking resistance. Specifically, in the same manner as in the above gloss evaluation, the nonaqueous ink composition was printed on a recording medium (glued polyvinyl chloride film (IMAGin JT5829R, manufactured by MACtac) in a high-quality printing mode (1440 × 720 dpi) at a base material surface temperature of 40°C to form a solid portion, and the recorded matter was wound up and then left to stand for 24 hours, and then the recorded matter was spread out, and offset to a back surface of the film overlapping a surface of the recorded matter and the surface of the recorded matter were evaluated (this is indicated as "blocking resistance" in the table).

### Evaluation Standard

Evaluation 5: No offset to the back surface after winding up, and no roughness on the surface of the recorded matter.
Evaluation 4: No offset to the back surface after winding up, but slight roughness is observed on the surface of the recorded matter, yet design is not impaired.
Evaluation 3: Slight offset to the back surface is observed after winding up, and slight marks are also observed on the surface of the recorded matter.
Evaluation 2: Offset to the back surface is clearly observed after winding up, and marks are observed on the surface of the recorded matter.
Evaluation 1: Significant transfer of ink to the back surface is observed after winding up, and the surface of the recorded matter is greatly impaired in design.

### (Solid Filling)

The nonaqueous ink compositions in the examples and comparative examples were evaluated for solid filling. Specifically, in the same manner as in the above gloss evaluation, the nonaqueous ink composition was printed on a recording medium (glued polyvinyl chloride film (IMAGin JT5829R, manufactured by MACtac) in a high-speed printing mode (360 × 720 dpi) in two directions at a base material surface temperature of 40°C, and filling (white spots) of a portion where solid printing was performed was confirmed (this is indicated as "solid filling" in the table).

### Evaluation Standard

Evaluation 5: A uniform solid is formed.
Evaluation 4: No white spots can be visually confirmed but slight color unevenness can be confirmed, yet design is not impaired.
Evaluation 3: No white spots can be visually confirmed, but color unevenness can be confirmed.
Evaluation 2: White spots can be confirmed.
Evaluation 1: Significant white spots can be confirmed, and a decrease in density is observed.

### (Storage Stability)

The nonaqueous ink compositions of Examples and Comparative Examples were evaluated for storage stability. Specifically, the nonaqueous ink composition was stored at 60°C for one month, and changes in viscosity and volume-based cumulative 50% particle diameter (D50) of a pigment before and after a test were observed. The viscosity of the ink was measured under a condition of 20°C using a falling ball type viscosity meter (AMVn manufactured by Anton Paar), and the volume-based cumulative 50% particle diameter (D50) of the pigment was measured under a condition of 25°C using a particle size distribution analyzer (NANOTRACWAVE particle size analyzer manufactured by Microtrack Bell Co., Ltd.) (this is indicated as "storage stability" in the table). In the following evaluation, the nonaqueous ink composition having larger rates of change in the "viscosity" and the volume-based cumulative 50% particle diameter (D50) of the pigment was evaluated.

### Evaluation Standard

Evaluation 5: The rates of change in both the viscosity and the volume-based cumulative 50% particle diameter (D50) of the pigment are less than 3%.
Evaluation 4: Either the rate of change in the viscosity or the rate of change in volume-based cumulative 50% particle diameter (D50) of the pigment is 3% or more and less than 5%.
Evaluation 3: Either the rate of change in the viscosity or the rate of change in volume-based cumulative 50% particle diameter (D50) of the pigment is 5% or more and less than 8%.
Evaluation 2: Either the rate of change in the viscosity or the rate of change in volume-based cumulative 50% particle diameter (D50) of the pigment is 8% or more and less than 10%.
Evaluation 1: Either the rate of change in the viscosity or the rate of change in volume-based cumulative 50% particle diameter (D50) of the pigment is 10% or more.

**[Table 2]**

| Classification | Type | Abbreviation | Flash point | Example1 | Example2 | Examples | Example4 | Examples | Example6 | Example7 | Examples | Example9 | Example10 |
|---|---|---|---|---|---|---|---|---|---|---|---|---|---|
| Amide-based solvent(a) | Alkylamide | DEF | 60 | 1.0 | 3.0 | 5.0 | 10.5 | 15.0 | 71.5 | 81.5 | 86.5 | 88.5 | 1.0 |
| | | DEPA | 73 | | | | | | | | | | |
| | | DEAA | 78 | | | | | | | | | | |
| | | DMF | 60 | | | | | | | | | | |
| Organic solvent(b) | Monoalkyl ether | MFDG | 76.5 | 90.5 | 88.5 | 86.5 | 81.0 | 76.5 | 20.0 | 10.0 | 5.0 | 3.0 | 29.0 |
| | | MFTG | 123 | | | | | | | | | | |
| | | BTG | 156 | | | | | | | | | | |
| | | BTeG | 166 | | | | | | | | | | |
| | | HeTeG | 175 | | | | | | | | | | |
| Other organic solvents | Dialkyl ether | DMDG | 85.2 | | | | | | | | | | |
| | | MEDG | 64 | | | | | | | | | | |
| | | DEDG | 71 | | | | | | | | | | 61.5 |
| | | DMFDG | 65 | | | | | | | | | | |
| | Cyclic ester | GBL | 101 | | | | | | | | | | |
| Classification | Type | Name | Intrinsic viscosity of 90 mL/g or more | | | | | | | | | | |
| Resin | Acrylic resin | Acrylic resin 1 | 0.0% | 2.5 | 2.5 | 2.5 | 2.5 | 2.5 | 2.5 | 2.5 | 2.5 | 2.5 | 2.5 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| Dispersant | Polycaprolactone-based | Solsperse32000 | | 1.5 | 1.5 | 1.5 | 1.5 | 1.5 | 1.5 | 1.5 | 1.5 | 1.5 | 1.5 |
| | | Solsperse33000 | | | | | | | | | | | |
| Pigment | Carbon black | | | | | | | | | | | | |
| | Cyan (C. I. Pigment Blue 15:4) | | | | | | | | | | | | |
| | Magenta (C. I. Pigment Red 122) | | 3.0 | 3.0 | 3.0 | 3.0 | 3.0 | 3.0 | 3.0 | 3.0 | 3.0 | 3.0 | |
| | Magenta (C. I. Pigment Violet 19) | | | | | | | | | | | | |
| | Yellow (C. I. Pigment Yellow 155) | | | | | | | | | | | | |
| | Yellow (C. I. Pigment Yellow 150) | | | | | | | | | | | | |
| | Orange (C. I. Pigment Orange 43) | | | | | | | | | | | | |
| | Orange (C. I. Pigment Orange 64) | | | | | | | | | | | | |
| | Green (C. I. Pigment Green 36) | | | | | | | | | | | | |
| | Green (C. I. Pigment Green 58) | | | | | | | | | | | | |
| | Red (C. I. Pigment Red 177) | | | | | | | | | | | | |
| | Red (C. I. Pigment Red 254) | | | | | | | | | | | | |
| | White (C. I. Pigment White 6) | | | | | | | | | | | | |
| Total | | | 100.0 | 100.0 | 100.0 | 100.0 | 100.0 | 100.0 | 100.0 | 100.0 | 100.0 | 100.0 | |
| Intrinsic viscosity of 90 ml/g or more in total amount of resin | | | 0.1% | 0.1% | 0.1% | 0.1% | 0.1% | 0.1% | 0.1% | 0.1% | 0.1% | 0.1% | |
| Evaluation item | | Bleeding | 2 | 3 | 3 | 4 | 5 | 5 | 5 | 5 | 5 | 2 | |
| | | Gloss | 5 | 5 | 5 | 5 | 5 | 5 | 4 | 3 | 2 | 5 | |
| | | Blocking resistance | 3 | 3 | 4 | 5 | 5 | 4 | 3 | 3 | 3 | 3 | |
| | | Solid filling | 5 | 5 | 5 | 5 | 5 | 5 | 4 | 3 | 3 | 5 | |
| | | Storage stability | 5 | 5 | 5 | 5 | 5 | 5 | 5 | 3 | 2 | 5 | |

**[Table 3]**

| Classification | Type | Abbreviation | Flash point | Example11 | Example12 | Example13 | Example14 | Example15 | Example16 | Example17 | Example18 | Example19 | Example20 |
|---|---|---|---|---|---|---|---|---|---|---|---|---|---|
| Amide-based solvent(a) | Alkylamide | DEF | 60 | 11.0 | 25.0 | 28.5 | 29.5 | 25.0 | 25.0 | 25.0 | 25.0 | | |
| | | DEPA | 73 | | | | | | | | | 25.0 | |
| | | DEAA | 78 | | | | | | | | | | 25.0 |
| | | DMF | 60 | | | | | | | | | | |
| Organic solvent(b) | Monoalkyl ether | MFDG | 76.5 | 19.0 | 5.0 | 1.5 | 0.5 | | | | | 5.0 | 5.0 |
| | | MFTG | 123 | | | | | 5.0 | | | | | |
| | | BTG | 156 | | | | | | 5.0 | | | | |
| | | BTeG | 166 | | | | | | | 5.0 | | | |
| | | HeTeG | 175 | | | | | | | | 5.0 | | |
| Other organic solvents | Dialkyl ether | DMDG | 85.2 | | | | | | | | | | |
| | | MEDG | 64 | | | | | | | | | | |
| | | DEDG | 71 | 61.5 | 61.5 | 61.5 | 61.5 | 61.5 | 61.5 | 61.5 | 61.5 | 61.5 | 61.5 |
| | | DMFDG | 65 | | | | | | | | | | |
| | Cyclic ester | GBL | 101 | | | | | | | | | | |
| Classification | Type | Name | Intrinsic viscosity of 90 mL/g or more | | | | | | | | | | |
| Resin | Acrylic resin | Acrylic resin 1 | 0.0% | 2.5 | 2.5 | 2.5 | 2.5 | 2.5 | 2.5 | 2.5 | 2.5 | 2.5 | 2.5 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| Dispersant | Polycaprolactone-based | Solsperse32000 | | 1.5 | 1.5 | 1.5 | 1.5 | 1.5 | 1.5 | 1.5 | 1.5 | 1.5 | 1.5 |
| | | Solsperse33000 Carbon black | | | | | | | | | | | |
| | | Cyan (C. I. Pigment Blue 15:4) | | | | | | | | | | | |
| | | Magenta (C. I. Pigment Red 122) | | 3.0 | 3.0 | 3.0 | 3.0 | 3.0 | 3.0 | 3.0 | 3.0 | 3.0 | 3.0 |
| | | Magenta (C. I. Pigment Violet 19) | | | | | | | | | | | |
| | | Yellow (C. I. Pigment Yellow 155) | | | | | | | | | | | |
| | | Yellow (C. I. Pigment Yellow 150) | | | | | | | | | | | |
| Pigment | | Orange (C. I. Pigment Orange 43) | | | | | | | | | | | |
| | | Orange (C. I. Pigment Orange 64) | | | | | | | | | | | |
| | | Green (C. I. Pigment Green 36) | | | | | | | | | | | |
| | | Green (C. I. Pigment Green 58) | | | | | | | | | | | |
| | | Red (C. I. Pigment Red 177) | | | | | | | | | | | |
| | | Red (C. I. Pigment Red 254) | | | | | | | | | | | |
| | | White (C. I. Pigment White 6) | | | | | | | | | | | |
| Total | | | | 100.0 | 100.0 | 100.0 | 100.0 | 100.0 | 100.0 | 100.0 | 100.0 | 100.0 | 100.0 |
| Intrinsic viscosity of 90 ml/g or more in total amount of resin | | | | 0.1% | 0.1% | 0.1% | 0.1% | 0.1% | 0.1% | 0.1% | 0.1% | 0.1% | 0.1% |
| Evaluation item | | | Bleeding | 4 | 5 | 5 | 5 | 5 | 4 | 3 | 2 | 4 | 4 |
| | | | Gloss | 5 | 5 | 4 | 2 | 5 | 5 | 5 | 5 | 5 | 5 |
| | | | Blocking resistance | 5 | 5 | 5 | 5 | 5 | 5 | 5 | 5 | 5 | 5 |
| | | | Solid filling | 5 | 5 | 3 | 4 | 5 | 5 | 5 | 5 | 5 | 5 |
| | | | Storage stability | 5 | 4 | 3 | 2 | 4 | 4 | 4 | 4 | 4 | 4 |

**[Table 4]**

| Classification | Type | Abbreviation | Flash point | Example21 | Example22 | Example23 | Example24 | Example25 | Example26 | Example27 | Example28 | Example29 | Example30 |
|---|---|---|---|---|---|---|---|---|---|---|---|---|---|
| Amide-based solvent(a) | Alkylamide | DEF | 60 | | 25.0 | 25.0 | 25.0 | 25.0 | 25.0 | 25.0 | 25.0 | 25.0 | 25.0 |
| | | DEPA | 73 | | | | | | | | | | |
| | | DEAA | 78 | | | | | | | | | | |
| | | DMF | 60 | 25.0 | | | | | | | | | |
| Organic solvent(b) | Monoalkyl ether | MFDG | 76.5 | 5.0 | 5.0 | 5.0 | 5.0 | 3.0 | 3.0 | 3.0 | 3.0 | 3.0 | 1.0 |
| | | MFTG | 123 | | | | | | | | | | |
| | | BTG | 156 | | | | | 2.0 | 2.0 | 2.0 | 2.0 | | 4.0 |
| | | BTeG | 166 | | | | | | | | | 2.0 | |
| | | HeTeG | 175 | | | | | | | | | | |
| Other organic solvents | Dialkyl ether | DMDG | 85.2 | | 61.5 | | | | | | | | |
| | | MEDG | 64 | | | 61.5 | | | | | | | |
| | | DEDG | 71 | 61.5 | | | | 61.5 | 63.5 | 60 | 56.5 | 61.5 | 61.5 |
| | | DMFDG | 65 | | | | 61.5 | | | | | | |
| | Cyclic ester | GBL | 101 | | | | | | | | | | |

| Classification | Type | Name | Intrinsic viscosity of 90 mL/g or more | | | | | | | | | | |
|---|---|---|---|---|---|---|---|---|---|---|---|---|---|
| Resin | Acrylic resin | Acrylic resin 1 | 0.0% | 2.5 | 2.5 | 2.5 | 2.5 | 2.5 | 1.5 | 3.5 | 5.5 | 2.5 | 2.5 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 0.5 | 2.0 | 3.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| Dispersant | Polycaprolactone-based | Solsperse32000 | | 1.5 | 1.5 | 1.5 | 1.5 | 1.5 | | 1.5 | 1.5 | 1.5 | 1.5 |
| | | Solsperse33000 | | | | | | | 1.5 | | | | |
| | | Carbon black | | | | | | | | | | | |
| | | Cyan (C. I. Pigment Blue 15:4) | | | | | | | | | | | |
| | | Magenta (C. I. Pigment Red 122) | | 3.0 | 3.0 | 3.0 | 3.0 | 3.0 | 3.0 | 3.0 | 3.0 | 3.0 | 3.0 |
| | | Magenta (C. I. Pigment Violet 19) | | | | | | | | | | | |
| | | Yellow (C. I. Pigment Yellow 155) | | | | | | | | | | | |
| | | Yellow (C. I. Pigment Yellow 150) | | | | | | | | | | | |
| Pigment | | Orange (C. I. Pigment Orange 43) | | | | | | | | | | | |
| | | Orange (C. I. Pigment Orange 64) | | | | | | | | | | | |
| | | Green (C. I. Pigment Green 36) | | | | | | | | | | | |
| | | Green (C. I. Pigment Green 58) | | | | | | | | | | | |
| | | Red (C. I. Pigment Red 177) | | | | | | | | | | | |
| | | Red (C. I. Pigment Red 254) | | | | | | | | | | | |
| | | White (C. I. Pigment White 6) | | | | | | | | | | | |
| Total | | | | 100.0 | 100.0 | 100.0 | 100.0 | 100.0 | 100.0 | 100.0 | 100.0 | 100.0 | 100.0 |
| Intrinsic viscosity of 90 ml/g or more in total amount of resin | | | | 0.1% | 0.1% | 0.1% | 0.1% | 0.1% | 0.1% | 0.1% | 0.1% | 0.1% | 0.1% |
| Evaluation item | | | Bleeding | 3 | 5 | 5 | 5 | 5 | 5 | 5 | 5 | 4 | 4 |
| | | | Gloss | 3 | 5 | 5 | 5 | 5 | 5 | 5 | 5 | 5 | 5 |
| | | | Blocking resistance | 3 | 5 | 5 | 5 | 5 | 5 | 5 | 5 | 5 | 5 |
| | | | Solid filling | 3 | 5 | 5 | 5 | 5 | 5 | 5 | 4 | 5 | 5 |
| | | | Storage stability | 3 | 4 | 4 | 4 | 4 | 4 | 4 | 4 | 4 | 4 |

**[Table 5]**

| Classification | Type | Abbreviation | Flash point | Example31 | Example32 | Example33 | Example34 | Example35 | Example36 | Example37 | Example38 | Example39 | Example40 |
|---|---|---|---|---|---|---|---|---|---|---|---|---|---|
| Amide-based solvent(a) | Alkylamide | DEF | 60 | 25.0 | 25.0 | 25.0 | 25.0 | 25.0 | 25.0 | 25.0 | 25.0 | 25.0 | 25.0 |
| | | DEPA | 73 | | | | | | | | | | |
| | | DEAA | 78 | | | | | | | | | | |
| | | DMF | 60 | | | | | | | | | | |
| Organic solvent(b) | Monoalkyl ether | MFDG | 76.5 | 5.0 | 31.5 | 46.5 | 5.0 | 5.0 | 5.0 | 5.0 | 5.0 | 5.0 | 5.0 |
| | | MFTG | 123 | | | | | | | | | | |
| | | BTG | 156 | | | | | | | | | | |
| | | BTeG | 166 | | | | | | | | | | |
| | | HeTeG | 175 | | | | | | | | | | |
| Other organic solvents | Dialkyl ether | DMDG | 85.2 | | | | | | | | | | |
| | | MEDG | 64 | | | | | | | | | | |
| | | DEDG | 71 | 61.5 | 35.0 | 20.0 | 61.5 | 61.5 | 61.5 | 61.5 | 61.5 | 61.5 | 61.5 |
| | | DMFDG | 65 | | | | | | | | | | |
| | Cyclic ester | GBL | 101 | | | | | | | | | | |

| Classification | Type | Name | Intrinsic viscosity of 90 mL/g or more | | | | | | | | | | |
|---|---|---|---|---|---|---|---|---|---|---|---|---|---|
| Resin | Acrylic resin | Acrylic resin 1 | 0.0% | 2.5 | 2.5 | 2.5 | 2.5 | | | | 1.5 | 4.0 | |
| | | Acrylic resin 2 | 2.2% | | | | | 2.5 | | | | | 4.0 |
| | | Acrylic resin 3 | 8.1% | | | | | | 2.5 | 2.5 | | | |
| | Vinyl chloride-vinyl acetate copolymer resin | Vinyl chloride-vinyl acetate copolymer resin 1 | 0.3% | 1.5 | 1.5 | 1.5 | | | 1.5 | | | | |
| | | Vinyl chloride-vinyl acetate copolymer resin 2 | 1.4% | | | | | 1.5 | | | | | |
| | | Vinyl chloride-vinyl acetate copolymer resin 3 | 8.2% | | | | 1.5 | | | 1.5 | 2.5 | | |
| Dispersant | Polycaprolactone-based | Solsperse32000 | | 1.5 | 1.5 | 1.5 | 1.5 | 1.5 | 1.5 | 1.5 | 1.5 | 1.5 | 1.5 |
| | | Solsperse33000 | | | | | | | | | | | |
| | | Carbon black | | | | | | | | | | | |
| | | Cyan (C. I. Pigment Blue 15:4) | | | | | | | | | | | |
| | | Magenta (C. I. Pigment Red 122) | | 3.0 | 3.0 | 3.0 | 3.0 | 3.0 | 3.0 | 3.0 | 3.0 | 3.0 | 3.0 |
| | | Magenta (C. I. Pigment Violet 19) | | | | | | | | | | | |
| | | Yellow (C. I. Pigment Yellow 155) | | | | | | | | | | | |
| | | Yellow (C. I. Pigment Yellow 150) | | | | | | | | | | | |
| Pigment | | Orange (C. I. Pigment Orange 43) | | | | | | | | | | | |
| | | Orange (C. I. Pigment Orange 64) | | | | | | | | | | | |
| | | Green (C. I. Pigment Green 36) | | | | | | | | | | | |
| | | Green (C. I. Pigment Green 58) | | | | | | | | | | | |
| | | Red (C. I. Pigment Red 177) | | | | | | | | | | | |
| | | Red (C. I. Pigment Red 254) | | | | | | | | | | | |
| | | White (C. I. Pigment White 6) | | | | | | | | | | | |
| Total | | | | 100.0 | 100.0 | 100.0 | 100.0 | 100.0 | 100.0 | 100.0 | 100.0 | 100.0 | 100.0 |
| Intrinsic viscosity of 90 ml/g or more in total amount of resin | | | | 0.1% | 0.1% | 0.1% | 3.1% | 1.9% | 5.2% | 8.1% | 5.1% | 0.0% | 2.2% |
| Evaluation item | | | Bleeding | 5 | 5 | 5 | 5 | 5 | 5 | 5 | 5 | 5 | 5 |
| | | | Gloss | 5 | 5 | 5 | 5 | 5 | 5 | 5 | 5 | 4 | 4 |
| | | | Blocking resistance | 5 | 5 | 5 | 5 | 5 | 5 | 5 | 5 | 5 | 5 |
| | | | Solid filling | 5 | 5 | 5 | 3 | 4 | 2 | 2 | 2 | 5 | 5 |
| | | | Storage stability | 4 | 4 | 4 | 4 | 4 | 3 | 3 | 3 | 4 | 4 |

**[Table 6]**

| Classification | Type | Abbreviation | Flash point | Example41 | Example42 | Example43 | Example44 | Example45 | Example46 | Example47 | Example48 | Example49 | Example50 |
|---|---|---|---|---|---|---|---|---|---|---|---|---|---|
| Amide-based solvent(a) | Alkylamide | DEF | 60 | 25.0 | 25.0 | 25.0 | 25.0 | 25.0 | 25.0 | 71.5 | 25.0 | 25.0 | 25.0 |
| | | DEPA | 73 | | | | | | | | | | |
| | | DEAA | 78 | | | | | | | | | | |
| | | DMF | 60 | | | | | | | | | | |
| Organic solvent(b) | Monoalkyl ether | MFDG | 76.5 | 5.0 | 5.0 | 5.0 | 5.0 | 5.0 | 5.0 | 20.0 | 5.0 | 5.0 | 5.0 |
| | | MFTG | 123 | | | | | | | | | | |
| | | BTG | 156 | | | | | | | | | | |
| | | BTeG | 166 | | | | | | | | | | |
| | | HeTeG | 175 | | | | | | | | | | |
| Other organic solvents | Dialkyl ether | DMDG | 85.2 | | | | | | | | | | |
| | | MEDG | 64 | | | | | | | | | | |
| | | DEDG | 71 | 61.5 | 61.5 | 61.5 | 61.5 | 61.5 | 61.5 | | 63.9 | 64 | 61.5 |
| | | DMFDG | 65 | | | | | | | | | | |
| | Cyclic ester | GBL | 101 | | | | | | | | | | |

| Classification | Type | Name | Intrinsic viscosity of 90 mL/g or more | | | | | | | | | | |
|---|---|---|---|---|---|---|---|---|---|---|---|---|---|
| Resin | Acrylic resin | Acrylic resin 1 | 0.0% | | | | | 2.5 | 2.5 | 2.5 | 2.5 | 2.5 | 2.5 |
| | | Acrylic resin 2 | 2.2% | | | | | | | | | | |
| | | Acrylic resin 3 | 8.1% | 4.0 | | | | | | | | | |
| | Vinyl chloride-vinyl acetate copolymer resin | Vinyl chloride-vinyl acetate copolymer resin 1 | 0.3% | | 4.0 | | | 1.5 | 1.5 | 1.5 | 1.5 | 1.5 | 1.5 |
| | | Vinyl chloride-vinyl acetate copolymer resin 2 | 1.4% | | | 4.0 | | | | | | | |
| | | Vinyl chloride-vinyl acetate copolymer resin 3 | 8.2% | | | | 4.0 | | | | | | |
| Dispersant | Polycaprolactone- based | Solsperse32000 | | 1.5 | 1.5 | 1.5 | 1.5 | 1.5 | | | 1.5 | 1.5 | 1.5 |
| | | Solsperse33000 | | | | | | | 1.5 | 1.5 | | | |
| Pigment | | Carbon black | | | | | | 3.0 | 3.0 | 3.0 | 0.5 | | |
| | | Cyan (C. I. Pigment Blue 15:4) | | | | | | | | | 0.1 | 0.5 | |
| | | Magenta (C. I. Pigment Red 122) | | 3.0 | 3.0 | 3.0 | 3.0 | | | | | | 3.0 |
| | | Magenta (C. I. Pigment Violet 19) | | | | | | | | | | | |
| | | Yellow (C. I. Pigment Yellow 155) | | | | | | | | | | | |
| | | Yellow (C. I. Pigment Yellow 150) | | | | | | | | | | | |
| | | Orange (C. I. Pigment Orange 43) | | | | | | | | | | | |
| | | Orange (C. I. Pigment Orange 64) | | | | | | | | | | | |
| | | Green (C. I. Pigment Green 36) | | | | | | | | | | | |
| | | Green (C. I. Pigment Green 58) | | | | | | | | | | | |
| | | Red (C. I. Pigment Red 177) | | | | | | | | | | | |
| | | Red (C. I. Pigment Red 254) | | | | | | | | | | | |
| | | White (C. I. Pigment White 6) | | | | | | | | | | | |
| Total | | | | 100.0 | 100.0 | 100.0 | 100.0 | 100.0 | 100.0 | 100.0 | 100.0 | 100.0 | 100.0 |
| Intrinsic viscosity of 90 ml/g or more in total amount of resin | | | | 8.1% | 0.3% | 1.4% | 8.2% | 0.1% | 0.1% | 0.1% | 0.1% | 0.1% | 0.1% |
| Evaluation item | | | Bleeding | 5 | 5 | 5 | 5 | 5 | 5 | 5 | 5 | 5 | 5 |
| | | | Gloss | 4 | 5 | 5 | 5 | 5 | 5 | 5 | 5 | 5 | 5 |
| | | | Blocking resistance | 5 | 5 | 5 | 5 | 5 | 5 | 4 | 5 | 5 | 5 |
| | | | Solid filling | 2 | 5 | 4 | 2 | 5 | 5 | 5 | 5 | 5 | 5 |
| | | | Storage stability | 4 | 4 | 4 | 4 | 4 | 4 | 5 | 4 | 4 | 4 |

**[Table 7]**

| Classification | Type | Abbreviation | Flash point | Example51 | Example52 | Example53 | Example54 | Example55 | Example56 | Example57 | Example58 | Example59 | Example60 |
|---|---|---|---|---|---|---|---|---|---|---|---|---|---|
| Amide-based solvent(a) | Alkylamide | DEF | 60 | 25.0 | 25.0 | 25.0 | 25.0 | 25.0 | 25.0 | 25.0 | 25.0 | 25.0 | 25.0 |
| | | DEPA | 73 | | | | | | | | | | |
| | | DEAA | 78 | | | | | | | | | | |
| | | DMF | 60 | | | | | | | | | | |
| Organic solvent(b) | Monoalkyl ether | MFDG | 76.5 | 5.0 | 5.0 | 5.0 | 5.0 | 5.0 | 5.0 | 5.0 | 5.0 | 5.0 | 5.0 |
| | | MFTG | 123 | | | | | | | | | | |
| | | BTG | 156 | | | | | | | | | | |
| | | BTeG | 166 | | | | | | | | | | |
| | | HeTeG | 175 | | | | | | | | | | |
| Other organic solvents | Dialkyl ether | DMDG | 85.2 | | | | | | | | | | |
| | | MEDG | 64 | | | | | | | | | | |
| | | DEDG | 71 | 61.5 | 64 | 61.5 | 61.5 | 61.5 | 61.5 | 61.5 | 61.5 | 61.5 | 61.5 |
| | | DMFDG | 65 | | | | | | | | | | |
| | Cyclic ester | GBL | 101 | | | | | | | | | | |

| Classification | Type | Name | Intrinsic viscosity of 90 mL/g or more | | | | | | | | | | |
|---|---|---|---|---|---|---|---|---|---|---|---|---|---|
| Resin | Acrylic resin | Acrylic resin 1 | 0.0% | 2.5 | 2.5 | 2.5 | 2.5 | 2.5 | 2.5 | 2.5 | 2.5 | 2.5 | 2.5 |
| | | Acrylic resin 2 | 2.2% | | | | | | | | | | |
| | | Acrylic resin 3 | 8.1% | | | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | | | |
| | | Vinyl chloride-vinyl acetate copolymer resin 3 | 8.2% | | | | | | | | | | |
| Dispersant | Polycaprolactone-based | Solsperse32000 | | | 1.5 | 1.5 | 1.5 | 1.5 | 1.5 | | 1.5 | 1.5 | 1.5 |
| | | Solsperse33000 | | 1.5 | | | | | | 1.5 | | | |
| Pigment | | Carbon black | | | | | | | | | | | |
| | | Cyan (C. I. Pigment Blue 15:4) | | | | | | | | | | | |
| | | Magenta (C. I. Pigment Red 122) | | 3.0 | 0.5 | | | | | | | | |
| | | Magenta (C. I. Pigment Violet 19) | | | | 3.0 | | | | | | | |
| | | Yellow (C. I. Pigment Yellow 155) | | | | | 3.0 | | | | | | |
| | | Yellow (C. I. Pigment Yellow 150) | | | | | | 3.0 | | | | | |
| | | Orange (C. I. Pigment Orange 43) | | | | | | | 3.0 | 3.0 | | | |
| | | Orange (C. I. Pigment Orange 64) | | | | | | | | | 3.0 | | |
| | | Green (C. I. Pigment Green 36) | | | | | | | | | | 3.0 | |
| | | Green (C. I. Pigment Green 58) | | | | | | | | | | | 3.0 |
| | | Red (C. I. Pigment Red 177) | | | | | | | | | | | |
| | | Red (C. I. Pigment Red 254) | | | | | | | | | | | |
| | | White (C. I. Pigment White 6) | | | | | | | | | | | |
| Total | | | | 100.0 | 100.0 | 100.0 | 100.0 | 100.0 | 100.0 | 100.0 | 100.0 | 100.0 | 100.0 |
| Intrinsic viscosity of 90 ml/g or more in total amount of resin | | | | 0.1% | 0.1% | 0.1% | 0.1% | 0.1% | 0.1% | 0.1% | 0.1% | 0.1% | 0.1% |
| Evaluation item | | | Bleeding | 5 | 5 | 5 | 5 | 5 | 5 | 5 | 5 | 5 | 5 |
| | | | Gloss | 5 | 5 | 5 | 5 | 5 | 5 | 5 | 5 | 5 | 5 |
| | | | Blocking resistance | 5 | 5 | 5 | 5 | 5 | 5 | 5 | 5 | 5 | 5 |
| | | | Solid filling | 5 | 5 | 5 | 5 | 5 | 5 | 5 | 5 | 5 | 5 |
| | | | Storage stability | 4 | 4 | 4 | 4 | 4 | 4 | 4 | 4 | 4 | 4 |

**[Table 8]**

| Classification | Type | Abbreviation | Flash point | Example61 | Example62 | Example63 | Example64 | Comparative Example1 | Comparative Example2 | Comparativ e Example3 | Comparative Example4 |
|---|---|---|---|---|---|---|---|---|---|---|---|
| Amide-based solvent(a) | Alkylamide | DEF | 60 | 25.0 | 25.0 | 71.5 | 25.0 | 25.0 | | | |
| | | DEPA | 73 | | | | | | | | |
| | | DEAA | 78 | | | | | | | | |
| | | DMF | 60 | | | | | | | | |
| Organic solvent(b) | Monoalkyl ether | MFDG | 76.5 | 5.0 | 5.0 | 20.0 | 5.0 | | 25 | | |
| | | MFTG | 123 | | | | | | | | |
| | | BTG | 156 | | | | | | | 25 | |
| | | BTeG | 166 | | | | | | | | |
| | | HeTeG | 175 | | | | | | | | |
| Other organic solvents | Dialkyl ether | DMDG | 85.2 | | | | | | | | |
| | | MEDG | 64 | | | | | | | | |
| | | DEDG | 71 | 61.5 | 61.5 | | 49.5 | 66.5 | 66.5 | 66.5 | 66.5 |
| | | DMFDG | 65 | | | | | | | | |
| | Cyclic ester | GBL | 101 | | | | | | | | 25.0 |

| Classification | Type | Name | Intrinsic viscosity of 90 mL/g or more | | | | | | | | |
|---|---|---|---|---|---|---|---|---|---|---|---|
| Resin | Acrylic resin | Acrylic resin 1 | 0.0% | 2.5 | 2.5 | 2.5 | 2.5 | 2.5 | 2.5 | 2.5 | 2.5 |
| | | Acrylic resin 2 | 2.2% | | | | | | | | |
| | | Acrylic resin 3 | 8.1% | | | | | | | | |
| | Vinyl chloride-vinyl acetate copolymer resin | Vinyl chloride-vinyl acetate copolymer resin 1 | 0.3% | 1.5 | 1.5 | 1.5 | 1.5 | 1.5 | 1.5 | 1.5 | 1.5 |
| | | Vinyl chloride-vinyl acetate copolymer resin 2 | 1.4% | | | | | | | | |
| | | Vinyl chloride-vinyl acetate copolymer resin 3 | 8.2% | | | | | | | | |
| Dispersant | Polycaprolactone-based | Solsperse32000 | | 1.5 | 1.5 | | 1.5 | 1.5 | 1.5 | 1.5 | 1.5 |
| | | Solsperse33000 | | | | 1.5 | | | | | |
| Pigment | | Carbon black | | | | | | | | | |
| | | Cyan (C. I. Pigment Blue 15:4) | | | | | | | | | |
| | | Magenta (C. I. Pigment Red 122) | | | | | | 3.0 | 3.0 | 3.0 | 3.0 |
| | | Magenta (C. I. Pigment Violet 19) | | | | | | | | | |
| | | Yellow (C. I. Pigment Yellow 155) | | | | | | | | | |
| | | Yellow (C. I. Pigment Yellow 150) | | | | | | | | | |
| | | Orange (C. I. Pigment Orange 43) | | | | | | | | | |
| | | Orange (C. I. Pigment Orange 64) | | | | | | | | | |
| | | Green (C. I. Pigment Green 36) | | | | | | | | | |
| | | Green (C. I. Pigment Green 58) | | | | | | | | | |
| | | Red (C. I. Pigment Red 177) | | 3.0 | | | | | | | |
| | | Red (C. I. Pigment Red 254) | | | 3.0 | 3.0 | | | | | |
| | | White (C. I. Pigment White 6) | | | | | 15.0 | | | | |
| Total | | | | 100.0 | 100.0 | 100.0 | 100.0 | 100.0 | 100.0 | 100.0 | 100.0 |
| Intrinsic viscosity of 90 ml/g or more in total amount of resin | | | | 0.1% | 0.1% | 0.1% | 0.1% | 0.1% | 0.1% | 0.1% | 0.1% |
| Evaluation item | | | Bleeding | 5 | 5 | 5 | 5 | 5 | 1 | 1 | 5 |
| | | | Gloss | 5 | 5 | 5 | 5 | 1 | 5 | 5 | 1 |
| | | | Blocking resistance | 5 | 5 | 4 | 5 | 5 | 5 | 1 | 1 |
| | | | Solid filling | 5 | 5 | 5 | 5 | 2 | 5 | 5 | 2 |
| | | | Storage stability | 4 | 4 | 5 | 4 | 2 | 5 | 5 | 4 |

In the table, "MFDG" is dipropylene glycol monomethyl ether.

In the table, "MFTG" is tripropylene glycol monomethyl ether.

In the table, "BTG" is triethylene glycol mono-n-butyl ether.

In the table, "BTeG" is tetraethylene glycol monobutyl ether.

In the table, "HeTeG" is tetraethylene glycol monohexyl ether.

In the table, "DEF" is N,N-diethylformamide.

In the table, "DEPA" is N,N-diethylpropanamide.

In the table, "DEAA" is N,N-diethylacetamide.

In the table, "DMF" is N,N-dimethylformamide.

In the table, "DMDG" is diethylene glycol dimethyl ether.

In the table, "MEDG" is diethylene glycol methyl ethyl ether.

In the table, "DEDG" is diethylene glycol diethyl ether.

In the table, "DMFDG" is dipropylene glycol dimethyl ether.

In the table, "GBL" is γ-butyrolactone.

In the table, "Solsperse 32000" is a polycaprolactone-based dispersant manufactured by Lubrizol Corporation.

In the table, "Solsperse 33000" is a polycaprolactone-based dispersant manufactured by Lubrizol Corporation.

As can be seen from Table 2 to Table 8, the nonaqueous ink composition containing the amide-based solvent (a) and the organic solvent (b) is a nonaqueous ink composition capable of obtaining a recorded matter exhibiting excellent gloss and excellent blocking resistance.

In particular, in the nonaqueous ink compositions in Example 1 to Example 9 in which the mass ratio of the content of the amide-based solvent (a) to the content of the organic solvent (b) is changed, it can be seen that in Example 2 to Example 9 in which the mass ratio of the amide-based solvent (a) to the organic solvent (b) is within a range of 95:5 to 3:97, in addition to the effect of the invention, bleeding in printing is reduced as compared with that in Example 1. Further, it can be seen that in Example 1 to Example 8, a recorded matter exhibiting more excellent gloss can be obtained as compared with that in Example 9, and the nonaqueous ink composition is more excellent in storage stability.

In the nonaqueous ink compositions in Example 10 to Example 14 in which the mass ratio of the content of the amide-based solvent (a) to the content of the organic solvent (b) is changed and other organic solvents are further contained, the same tendency as that of the nonaqueous ink compositions in Example 1 to Example 9 is observed.

Further, in Example 12 and Example 15 to Example 18 in which the type of the organic solvent (b) is changed, in Example 12 and Example 15 to Example 17 in which the organic solvent (b) having a flash point of 170°C or lower is contained, in addition to the effect of the invention, it can be seen that the bleeding in printing is reduced and the printing is clear.

Further, it can be seen that the effect of the invention is particularly achieved in Example 12 and Example 19 to Example 21 in which the type of the amide-based solvent (a) is changed.

In Example 22 to Example 24 in which the types of other organic solvents are changed, the same results as that in Example 12 are obtained.

Further, in the nonaqueous ink compositions in Example 34 to Example 44 in which the content of the resin having the intrinsic viscosity at 25°C of 90 mL/g or more is changed, the nonaqueous ink compositions in examples in which the amount of the resin having the intrinsic viscosity at 25°C of 90 mL/g or more is in a range of 5 mass% or less in the total amount of the resin has excellent solid filling as compared with that in the nonaqueous ink compositions in the examples in which the amount of the resin is in a range of more than 5 mass%.

On the other hand, the nonaqueous ink composition in Comparative Example 1, which contains no organic solvent (b), has low storage stability, and gloss of the obtained recorded matter is low. Further, in the nonaqueous ink composition in Comparative Example 2, which contains no amide-based solvent (a), bleeding in printing occurred.

## Claims

1. A nonaqueous ink composition, which is to be ejected by an inkjet method, comprising: an organic solvent,
the organic solvent containing
an amide-based solvent (a),
an organic solvent (b) represented by the following formula (1),
[Chem. 1] R₁-(-O-R₂-)ₙ-OH... (1)
wherein R₁ represents an alkyl group having 6 or less carbon atoms, R₂ represents an ethylene group or a propylene group, and
n represents an integer of 1 or more and 6 or less.

2. The nonaqueous ink composition according to claim 1, wherein a mass ratio of a content of the amide-based solvent
(a) to a content of the organic solvent (b) (amide-based solvent (a):organic solvent (b)) is within a range of 95:5 to 3:97.

3. The nonaqueous ink composition according to claim 1 or 2, wherein the amide-based solvent (a) is represented by the following formula (2), 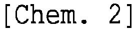 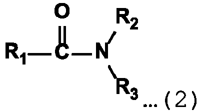 wherein R₁ represents hydrogen or an alkyl group having 1 or more and 4 or less carbon atoms, and R₂ and R₃ each independently represent hydrogen or an alkyl group having 1 or more and 4 or less carbon atoms.

4. The nonaqueous ink composition according to claim 3, wherein the amide-based solvent (a) contains at least one selected from the group consisting of N,N-diethylformamide, N,N-diethylpropanamide, and N,N-diethylacetamide.

5. The nonaqueous ink composition according to any one of claims 1 to 4, wherein a flash point of the organic solvent (b) is 170°C or lower.

6. The nonaqueous ink composition according to any one of claims 1 to 5, further comprising: a resin, wherein
the resin contains a resin having an intrinsic viscosity at 25°C of 90 mL/g or more in a range of 5 mass% or less in a total amount of the resin.

7. The nonaqueous ink composition according to any one of claims 1 to 6, wherein the nonaqueous ink composition is ejected by the inkjet method through a plastic tube using an inkjet recording apparatus including the plastic tube.

8. The nonaqueous ink composition according to any one of claims 1 to 7, wherein the nonaqueous ink composition is used on a resin base material.

9. A recording method comprising: ejecting the nonaqueous ink composition according to any one of claims 1 to 8 onto a surface of a base material by an inkjet method.

10. A method for producing a recorded matter comprising:
ejecting the nonaqueous ink composition according to any one of claims 1 to 8 onto a surface of a base material by an inkjet method.

11. A recorded matter comprising: a recording layer made of the nonaqueous ink composition according to any one of claims 1 to 8 formed on a surface of a base material.
